# EUROPÄISCHE PATENTSCHRIFT

(11) **EP 2 172 801 B1**
(45) Veröffentlichungstag und Bekanntmachung des Hinweises auf die Patenterteilung: **07.10.2020**
(21) Anmeldenummer: 09167974.6
(22) Anmeldetag: 17.08.2009
(51) Int. Cl.: B60K 35/00, G02B 27/01, G06F 3/01

(54) **Verfahren für eine Anzeige einer visuellen Warndarstellung**
Method for displaying a visual warning sign
Procédé d'affichage d'une représentation d'alerte visuelle

(30) Priorität: 01.10.2008 DE 102008042521
(43) Veröffentlichungstag der Anmeldung: 07.04.2010
(73) Patentinhaber: Robert Bosch GmbH, 70442 Stuttgart (DE)
(72) Erfinder: Krautter, Wolfgang, 71229 Leonberg (DE); Dambier, Michael, 68753 Waghaeusel (DE); Rimini-Doering, Maria, 70563 Stuttgart (DE); Manstetten, Dietrich, 71139 Ehningen (DE)

(56) Entgegenhaltungen:
- WO-A1-2004/049036
- JP-A- 2001 018 717
- US-A1- 2006 267 747
- US-A1- 2007 219 709

## Beschreibung

### Stand der Technik

Die Erfindung geht aus von einem Verfahren und einem Steuergerät für eine Anzeige einer visuellen Warndarstellung nach Gattung der unabhängigen Ansprüche.

Zur Warnung eines Fahrers eines Kraftfahrzeugs ist es bekannt, Warnungen an den Fahrer entweder akustisch und/oder visuell auszugeben. Eine visuelle Ausgabe einer Warnung erfolgt gemäß des Standes der Technik unter anderem über ein Head-Up-Display. Hierbei wird die Warnung in dem Blickfeld des Fahrers angezeigt, wobei das Blickfeld die Frontscheibe des Fahrzeugs und somit auch das Head-Up-Display umfasst. Ferner ist es aus der DE 199 51 001 A1 bekannt, mittels einer Kamera auf eine Blickrichtung eines Fahrers zu schließen, so dass nach Ermittlung der Blickrichtung eine Warnung in einem solchen Bereich des Head-Up-Displays eingeblendet wird, auf welchen der Blick des Fahrers gerichtet ist. Es erfolgt somit eine ortsabhängige Anzeige einer Warndarstellung innerhalb des Head-Up-Displays in abhängig der Blickrichtung des Fahrers.

Eine Erfassung von Verkehrssituationen und eine Beurteilung einer solchen als eine kritisch erfasste Verkehrssituation mittels Kamera, Radar-, Ultraschall- oder Infrarotsysteme mit entsprechenden Steuergeräten und Algorithmen sind aus dem Stand der Technik bekannt.

Die US 2007/219709 A1 offenbart ein System und eine Vorrichtung zur Fahrassistenz. Dabei wird eine Informationsbereitstellungseinheit mittels einer Steue-rungseinheit so ansteuert, dass diese eine von einer Informationsübertragungseinheit abgeleitete Umfeldinformation einem Fahrer zur Unterstützung beim Fahren eines Fahrzeugs bereitstellt. Ferner wird eine weitere Informationsbereitstellungseinheit mittels der Steuerungseinheit so ansteuert, dass diese weitere Informationsbereitstellungseinheit eine ergänzende Information bereitstellt, welche die Informationsbereitstellungseinheit identifiziert, die zur Bereitstellung der von der Informationsübertragungseinheit abgeleiteten Umfeldinformation gesteuert wird.

Die US 2006/267747 A offenbart eine Reisesicherheitsvorrichtung für ein Fahrzeug, in dem eine Warnung vor eine Gefahr einem Fahrer des Fahrzeugs per Blickfeldanzeige dargestellt wird.

### Vorteile der Erfindung

Das erfindungsgemäße Verfahren mit den Merkmalen des Hauptanspruchs hat demgegenüber den Vorteil, dass für eine Anzeige einer visuellen Warndarstellung als Warnung vor einer als kritisch erfassten Verkehrssituation derart erfolgt, dass für die Anzeige der visuellen Warndarstellung aus einer Gruppe von mindestens zwei, separat voneinander ansteuerbaren Anzeigeeinheiten eine Anzeigeeinheit in Abhängigkeit der Blickrichtung des Fahrers ausgewählt wird. Dieses hat den Vorteil, dass ein Fahrer eine Warndarstellung vor einer als kritisch erfassten Verkehrssituation auf einer solchen Anzeige angezeigt bekommt, auf welche seine Blickrichtung gerichtet ist.

Ferner handelt es bei der Anzeigeeinheit um ein Head-Up-Display, ein Display eines Combi-Instrumentes, ein Display eines Navigationsgerätes, ein Display einer Head-Unit, ein Display eines Mobiltelefons oder ein Display einer mobilen Rechnereinheit. Dieses hat den Vorteil, dass unterschiedliche, in einem Kraftfahrzeug vorkommende Anzeigeeinheiten genutzt werden, welche über Schnittstellen in einer zentralen Steuereinheit zur Ausgabe der visuellen Warnung verbunden sind und dass eine Vielzahl von Anzeigen derartiger Geräte genutzt werden kann.

Weiterhin handelt es sich bei der visuellen Warndarstellung um ein beispielhaftes Bild einer Verkehrssituation, eine beispielhafte Videosequenz einer Verkehrssituation, ein reales Bild einer momentanen Verkehrssituation des Fahrzeugs oder eine reale Videosequenz einer momentanen Verkehrssituation des Fahrzeugs. Hierdurch ergibt sich der Vorteil, dass durch unterschiedliche Formen von Bilddaten der Fahrer in unterschiedlicher Weise auf eine als kritisch erfasste Verkehrssituation aufmerksam gemacht werden kann. Wird beispielsweise ein beispielhaftes Bild einer Verkehrssituation dargestellt, so ist durch ein solches Bild, beispielsweise ein Piktogramm, für einen Fahrer die Kritizität der Verkehrssituation auf einfache Weise erfassbar. Eine Anzeige eines realen Bildes oder einer realen Videosequenz einer momentanen Verkehrssituation des Fahrzeugs hat den Vorteil, dass der Fahrer ohne Änderung seiner Blickrichtung die momentane Verkehrssituation des Fahrzeugs dargestellt bekommt. Er kann somit bereits in dem Moment, in welchem er seine Blickrichtung weg von der Anzeige hin zu der momentanen Verkehrssituation ändert, Maßnahmen zur Steuerung des Fahrzeugs einleiten.

Weiterhin wird nach Betätigung einer Eingabeeinheit durch den Fahrer die Darstellung der visuellen Warndarstellung beendet. Dieses ist vorteilhaft, da mitunter vor einer als kritisch erfassten Verkehrssituation durch die Anzeigeeinheit auch dann gewarnt wird, wenn ein Fahrer diese erfasste Verkehrssituation bereits erkannt hat. Durch Betätigung der Eingabeeinheit kann der Fahrer die Darstellung der visuellen Warndarstellung auf eigenen Wunsch beenden. Dieses kann beispielsweise dann der Fall sein, wenn der Fahrer durch die visuelle Warndarstellung nicht weiter abgelenkt werden möchte.

Ist beispielsweise die Blickrichtung des Fahrers im Zuge einer Bedientätigkeit an einer zentralen Bedienkonsole auf eine Anzeigeeinheit der Bedienkonsole gerichtet, so erscheint eine Warndarstellung, welche in einem Head-Up-Display dargestellt wird, nicht in seinem Blickfeld. Diese Warnung erreicht ihn erst dann, wenn er seine Blickrichtung von der Bedienkonsole weg und hin zu dem Head-Up-Display richtet. Auch in dem Fall, dass zusammen mit einer Anzeige einer visuellen Warndarstellung im Head-Up-Display gemeinsam eine akustische Warnung an den Fahrer ausgegeben wird, um den Fahrer dazu zu veranlassen, seinen Blick auf das Head-Up-Display zu errichten, so erreicht ihn die visuelle Warndarstellung erst nach der Änderung seiner Blickrichtung und somit zeitverzögert. Demgegenüber wird bei erfindungsgemäßer Auswahl einer Anzeigeeinheit, beispielsweise des Displays der Bedienkonsole, die visuelle Warndarstellung sofort im Blickfeld des Fahrers bzw. in seiner Blickrichtung ausgegeben, so dass der Fahrer durch die visuelle Warndarstellung auf der ausgewählten Anzeige vor einer als kritisch erfassten Verkehrssituation ohne Zeitverzögerung gewarnt wird. Eine Warnung auf dem Head-Up-Display gemäß des Standes der Technik ist für einen Fahrer mitunter nicht sofort als explizite Warnung erfassbar, wohingegen die erfindungsgemäße visuelle Warndarstellung, welche den Fahrer sofort erreicht, den Fahrer unmittelbar auf die kritische Verkehrssituation aufmerksam macht, so dass der Fahrer bereits eine erhöhte Aufmerksamkeit auf die ihn umgebende Verkehrssituation aufweist, wenn seine Blickrichtung weg von der Anzeige der Bedienkonsole hin zu der Verkehrssituation, welche ihn umgibt, richtet. Da im Straßenverkehr mitunter in kritischen Verkehrssituationen innerhalb von Sekundenbruchteilen durch einen Fahrer Maßnahmen eingeleitet werden müssen, wird durch das erfindungsgemäße Verfahren es einem Fahrer ermöglicht, diese Maßnahmen früher bzw. schneller einzuleiten, als bei einer gemäß des Standes der Technik angezeigten Warndarstellung in einem Head-Up-Display.

Durch die in den abhängigen Ansprüchen aufgeführten Maßnahmen sind vorteilhafte Weiterbildungen und Verbesserungen des in dem unabhängigen Anspruch angegebenen Verfahrens möglich.

Gemäß einer weiteren Ausführungsform der Erfindung wird zur Anzeige einer visuellen Warndarstellung eine einzige Anzeigeeinheit ausgewählt. Wird als diese einzige Anzeigeeinheit jene Anzeigeeinheit gewählt, deren Position im Fahrzeug am ehesten mit der Blickrichtung des Fahrers übereinstimmt, so wird durch die Ausgabe der visuellen Warndarstellung über diese einzige Anzeigeeinheit dem Fahrer nur auf einer einzigen Anzeigeeinheit eine Warnung angezeigt, wodurch er nicht durch mehrere Warnungen auf unterschiedlichen Anzeigeeinheiten verunsichert wird.

Gemäß einer weiteren Ausführungsform der Erfindung, werden für die Anzeige der visuellen Warndarstellungen jeweilige Anzeigeeinheiten über jeweilige, separate Schnittstellen zur Einspeisung von Bilddaten angesteuert. Dieses hat den Vorteil, dass nicht nur eine einzige Anzeigeeinheit zur Ausgabe einer visuellen Warndarstellung verwendet werden kann, sondern dass jeweilige Anzeigeeinheiten, welche im Kraftfahrzeug vorhanden sind, über ihre jeweiligen, separaten Schnittstellen angesteuert werden können. Durch eine derartige Ansteuerung können Bilddaten in die Anzeigeeinheiten eingespeist werden und über diese Anzeigen angezeigt werden. Hierdurch lassen sich unterschiedliche, in einem Kraftfahrzeug vorhandene Anzeigeeinheiten verwenden, was gegenüber dem Stand der Technik den Vorteil hat, dass aufgrund der Einspeisung von Bilddaten die visuelle Form der visuellen Warndarstellung, bzw. das Bild selbst, bestimmt wird. Vorzugsweise dienen die jeweiligen Anzeigeeinheiten lediglich zur Anzeige eines eingespiesenen Bildes. Dies ermöglicht eine hohe Flexibilität bezüglich der darzustellenden visuellen Warndarstellungen bzw. der darzustellenden Bilder, so dass die Form der Darstellung nicht durch die Anzeigeeinheiten, sondern durch die eingespeisten Bilddaten bestimmt wird.

Gemäß einer weiteren Ausführungsform der Erfindung handelt es sich bei einer ersten Sensoreinheit um eine Bilderfassungseinheit, welche als erste Sensordaten Bilddaten bereitstellt. Derartige Sensordaten in Form von Bilddaten einer Bilderfassungseinheit (beispielsweise einer Kamera) können, wie aus dem Stand der Technik bekannt, dahingehend ausgewertet werden, dass auf eine Blickrichtung des Fahrers geschlossen wird. Gemäß einer weiteren Ausführungsform der Erfindung handelt es sich bei der ersten Sensoreinheit um eine Bilderkennungseinheit, welche als erste Sensordaten die Blickrichtung des Fahrers bereitstellt. Derartige Bilderkennungseinheiten können beispielsweise durch eine Kombination einer Bilderfassungseinheit, in Form einer Kamera, sowie eines Steuergerätes zur Bilderkennung gegeben sein, wobei das Steuergerät durch die von der Bilderfassungseinheit bereitgestellten Bilddaten auf die Blickrichtung des Fahrers schließt und diese Blickrichtung als erste Sensordaten bereitstellt. Ferner handelt es sich vorzugsweise bei einer weiteren, zweiten Sensoreinheit um mindestens eine Bedieneinheit zur Bedienung durch einen Fahrer, welche als weitere Sensordaten Daten bezüglich der durch den Fahrer vorgenommenen Bedienung bereitstellt. Dieses hat den Vorteil, dass nicht nur durch eine Bilddatenauswertung von durch Bilderfassungseinheiten bereitgestellten Bilddaten auf eine Blickrichtung des Fahrers geschlossen wird, sondern dass ferner auch weitere Sensordaten, welche durch Bedieneinheiten bereitgestellt werden, dahingehend ausgewertet werden, dass auf die Blickrichtung des Fahrers geschlossen wird. Ist beispielsweise an einem Drehdruckknopf im Bereich der Mittelkonsole eines Fahrzeugs eine hohe Bedientätigkeit festgestellt worden, so lässt sich durch diese weiteren Sensordaten eine Plausibilisierung bzw. eine Überprüfung einer durch Bilddaten bekannten Blickrichtung durchführen. Hierdurch ergibt sich eine vorteilhafte höhere Sicherheit bei der Entscheidung bezüglich einer ermittelten Blickrichtung eines Fahrers.

Gemäß einer weiteren Ausführungsform der Erfindung handelt es sich bei der visuellen Warndarstellung um ein beispielhaftes Bild einer Verkehrssituation, eine beispielhafte Videosequenz einer Verkehrssituation, ein reales Bild einer momentanen Verkehrssituation des Fahrzeugs oder eine reale Videosequenz einer momentanen Verkehrssituation des Fahrzeugs. Hierdurch ergibt sich der Vorteil, dass durch unterschiedliche Formen von Bilddaten der Fahrer in unterschiedlicher Weise auf eine als kritisch erfasste Verkehrssituation aufmerksam gemacht werden kann. Wird beispielsweise ein beispielhaftes Bild einer Verkehrssituation dargestellt, so ist durch ein solches Bild, beispielsweise ein Piktogramm, für einen Fahrer die Kritizität der Verkehrssituation auf einfache Weise erfassbar. Eine Anzeige eines realen Bildes oder einer realen Videosequenz einer momentanen Verkehrssituation des Fahrzeugs hat den Vorteil, dass der Fahrer ohne Änderung seiner Blickrichtung die momentane Verkehrssituation des Fahrzeugs dargestellt bekommt. Er kann somit bereits in dem Moment, in welchem er seine Blickrichtung weg von der Anzeige hin zu der momentanen Verkehrssituation ändert, Maßnahmen zur Steuerung des Fahrzeugs einleiten.

Gemäß einer weiteren Ausführungsform der Erfindung wird die visuelle Warndarstellung in Abhängigkeit eines erfassten Typs einer kritischen Verkehrssituation gewählt. Dieses hat den Vorteil, dass durch eine Klassifizierung einer kritischen Verkehrssituation als ein bestimmter Typ einer Verkehrssituation Einfluss darauf genommen werden kann, welche Art einer visuellen Warndarstellung angezeigt wird. Hierdurch lassen sich je nach kritischer Verkehrssituation bzw. des klassifizierten Typs der Verkehrssituation unterschiedliche Warndarstellungen auswählen, welche ein direktes Informieren des Fahrers über die Art der momentan vorliegenden Verkehrssituation ermöglichen.

Gemäß einer weiteren Ausführungsform der Erfindung handelt es bei der Anzeigeeinheit um ein Head-Up-Display, ein Display eines Combi-Instrumentes, ein Display eines Navigationsgerätes, ein Display einer Head-Unit, ein Display eines Mobiltelefons oder ein Display einer mobilen Rechnereinheit. Dieses hat den Vorteil, dass unterschiedliche, in einem Kraftfahrzeug vorkommende Anzeigeeinheiten genutzt werden, welche über Schnittstellen in einer zentralen Steuereinheit zur Ausgabe der visuellen Warnung verbunden sind und dass eine Vielzahl von Anzeigen derartiger Geräte genutzt werden kann.

Gemäß einer weiteren Ausführungsform der Erfindung wird nach Betätigung einer Eingabeeinheit durch den Fahrer die Darstellung der visuellen Warndarstellung beendet. Dieses ist vorteilhaft, da mitunter vor einer als kritisch erfassten Verkehrssituation durch die Anzeigeeinheit auch dann gewarnt wird, wenn ein Fahrer diese erfasste Verkehrssituation bereits erkannt hat. Durch Betätigung der Eingabeeinheit kann der Fahrer die Darstellung der visuellen Warndarstellung auf eigenen Wunsch beenden. Dieses kann beispielsweise dann der Fall sein, wenn der Fahrer durch die visuelle Warndarstellung nicht weiter abgelenkt werden möchte.

Die erfindungsgemäße Steuereinheit zur Auswahl einer Anzeigeeinheit aus einer Gruppe von mindestens zwei Anzeigeeinheiten zur Anzeige einer visuellen Warndarstellung zur Warnung eines Fahrers eines Fahrzeugs vor einer kritischen Verkehrssituation weist unterschiedliche Schnittstellen auf. Die Steuereinheit weist mindestens eine erste Schnittstelle zur Ansteuerung einer ersten Anzeigeeinheit sowie mindestens eine weitere, zweite Schnittstelle zur Ansteuerung einer weiteren, zweiten Anzeigeeinheit auf. Ferner weist die Steuereinheit eine dritte Schnittstelle zu mindestens einer Sensoreinheit auf, welche Sensordaten bereitstellt, anhand derer die Steuereinheit auf eine Blickrichtung des Fahrers schließt. Ferner weist die Steuereinheit eine vierte Schnittstelle zu einer Erfassungseinheit zur Erfassung einer kritischen Verkehrssituation auf, wobei die Erfassungseinheit der Steuereinheit eine Erfassung einer kritischen Verkehrssituation signalisiert. Die Steuereinheit ist dadurch gekennzeichnet, dass bei Signalisierung einer kritischen Verkehrssituation an die Steuereinheit die Steuereinheit eine der Anzeigeeinheiten zur Anzeige der visuellen Warndarstellung in Abhängigkeit der Blickrichtung des Fahrers auswählt. Gegenüber dem Stand der Technik weist die erfindungsgemäße Steuereinheit den Vorteil auf, dass nicht nur in einem bestimmten Bereich eines Head-Up-Display eine Anzeige einer visuellen Warndarstellung erfolgt, sondern dass zur Anzeige der visuellen Warndarstellung aus mindestens zwei Anzeigeeinheiten eine Anzeigeeinheit ausgewählt wird. Gemäß einer weiteren Ausführungsform der Steuereinheit wird vorzugsweise eine einzige Anzeigeeinheit ausgewählt. Dieses hat den Vorteil, dass die Steuereinheit durch Auswahl einer einzigen Anzeigeeinheit zur Anzeige der visuellen Warndarstellung dafür sorgt, dass dem Fahrer die visuelle Warndarstellung nur an einer einzigen Stelle des Kraftfahrzeugs angezeigt wird, so dass der Fahrer nicht durch mehrere visuelle Warndarstellungen einer Warnung abgelenkt oder irritiert wird.

### Zeichnungen

Ausführungsbeispiele der Erfindung sind in den Zeichnungen dargestellt und in der nachfolgenden Beschreibung näher erläutert.
Zeichnung 1 zeigt einen Kfz-Innenraum aus einer Fahreransicht.
Zeichnung 2 zeigt den derartigen Kfz-Innenraum aus einer Seitenansicht.

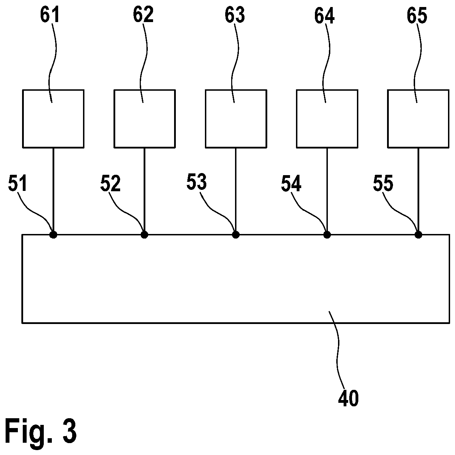

Figur 3 zeigt eine erfindungsgemäße Steuereinheit.

### Beschreibung der Ausführungsbeispiele

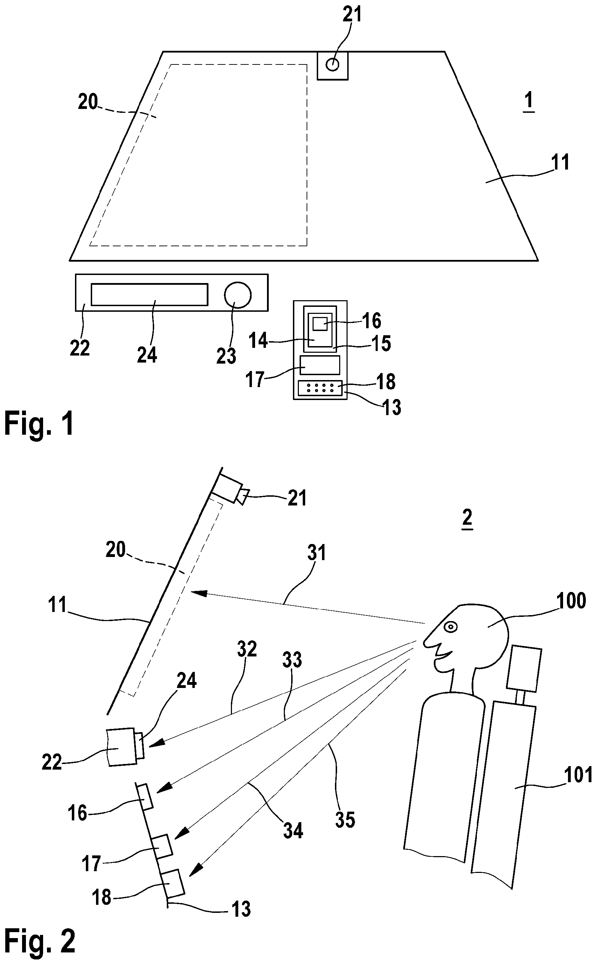

Die Figur 1 zeigt einen Kfz-Innenraum 1 aus Sicht eines Fahrers. Dargestellt ist eine Frontscheibe 11, innerhalb derer ein Bereich 20, dargestellt durch eine gestrichelte Linie, als Anzeigebereich eines Head-Up-Displays vorgesehen ist. Ferner ist unterhalb der Frontscheibe 11 ein Kombi-Instrument 22 vorhanden, welches vorzugsweise einen Tachometer 23 aufweist, sowie ein Display 24 zur Darstellung von Bilddaten. Im zentralen, mittleren Bereich des Kfz-Innenraums 1 befindet sich ferner vorzugsweise eine zentrale Bedienkonsole 13, beispielsweise eine Head-Unit, welche vorzugsweise ein Navigationsgerät, ein Radio, einen CD-Spieler, eine Klimaanlage oder ähnliche Geräte aufweist. Diese Geräte werden vorzugsweise mittels mindestens einer Bedieneinheit 18 der zentralen Bedienkonsole 13 angesteuert. Bei der mindestens einen Bedieneinheit 18 kann es sich beispielsweise um ein Keyboard, ein Dreh-Druckschalter, einen Trackball oder ähnliche Bedieneinheiten handeln. Die zentrale Bedienkonsole 13 weist ferner ein Display 17 zur Darstellung von Informationen, beispielsweise des Navigationsgerätes, des CD-Spielers, der Klimaanlage oder anderer Geräte auf. Vorzugsweise weist die zentrale Bedienkonsole 13 ferner eine Halteschale 15 zur Aufnahme eines Mobiltelefons 14 auf, wobei das Mobiltelefon 14 ferner über ein eigenes Display 16 verfügt. Alternativ ist es möglich, dass die Halteschale 15 nicht in der zentralen Bedienkonsole 13 vorgesehen ist, sondern in einem weiteren Bereich des Kfz-Innenraums 1. Vorzugsweise sind weitere, in der Figur 1 nicht dargestellte mobile Recheneinheiten vorgesehen, welche ebenfalls über Anzeigeeinheiten in Form von Displays verfügen.

Erfindungsgemäß erfolgt zur Anzeige einer visuellen Warndarstellung eine Auswahl einer der Anzeigeeinheiten 16, 17, 24, 20 in Abhängigkeit einer Blickrichtung des Fahrers. Hierbei wird durch eine Sensoreinheit 21, vorzugsweise eine Kamera im oberen, mittleren Bereich der Frontscheibe 11, Sensordaten bereitgestellt, anhand derer auf die Blickrichtung des Fahrers geschlossen wird. Vorzugsweise befindet sich die Kamera an einer anderen Position in dem Fahrzeug, beispielsweise in einem Kombi-Instrument einer Instrumententafel.

Der in der Figur 1 dargestellte Kfz-Innenraum 1 ist wiederum in der Figur 2 als Kfz-Innenraum 2 aus Seitenansicht dargestellt. Auch hier ist die Frontscheibe 11 mit einem Bereich 20 als Anzeigebereich eines Head-Up-Displays dargestellt. Ferner ist ein Kombiinstrument 22 mit einem Display 24, als auch eine zentrale Bedienkonsole 13 mit einem Display 17 sowie vorzugsweise einer Bedieneinheit 18 dargestellt. Vorzugsweise befindet sich in der Zentralbedienkonsole 13 ein Mobiltelefon mit einem Display 16. Im oberen Bereich der Frontscheibe 11 ist vorzugsweise eine Sensoreinheit 21 in Form einer Kamera vorgesehen. Auf einem Sitz 101 sitzt ein Fahrer 100, welcher gemäß Fig. 2 unterschiedliche Blickrichtungen aufweisen kann. Die Blickrichtungen sind durch jeweilige Pfeile 31 bis 35 von den Augen des Fahrers hin zu den jeweiligen Anzeigeeinheiten 20, 24, 16, 17 dargestellt. Eine erste Blickrichtung des Fahrers 31 führt von den Augen des Fahrers hin zu dem Head-Up-Display 20. Eine zweite Blickrichtung des Fahrers 32 führt hin zu dem Display 24 des Kombininstruments 22. Eine dritte Blickrichtung 33 führt hin zu einem Display 16 eines Mobiltelefons. Eine vierte Blickrichtung 34 führt hin zu einem Display 17 einer zentralen Bedienkonsole 13, beispielsweise einer Headunit. Die in diesem Ausführungsbeispiel dargestellten und erwähnten Anzeigeeinheiten stellen nur eine Auswahl an möglichen Anzeigeeinheiten dar, welche gemäß des erfindungsgemäßen Verfahrens zur Anzeige einer visuellen Bahndarstellung angesteuert werden können. Es ist für einen Fachmann verständlich, dass weitere, in einem KFZ vorhandene Anzeigeeinheiten zur Anzeige einer visuellen Bahndarstellung verwendet werden können. Die dargestellten Anzeigeeinheiten sind durch jeweilige Schnittstellen mit einer zentralen Steuereinheit, durch die hier nicht dargestellt ist, verbunden, so dass eine Ansteuerung der Anzeigeeinheiten zur Anzeige der visuellen Bahndarstellung möglich ist. Derartige Schnittstellen bzw. Datenschnittstellen zur Übermittlung von Bilddaten, können beispielsweise ein CAN-Bus, drahtgebundene aber auch nicht drahtgebundene Schnittstellen in Form von beispielsweise USB-Schnittstellen oder W-Lan-Schnittstellen sein.

Wird durch in den Figuren nicht dargestellte Erfassungseinheiten - beispielsweise Umfeldkameras, Radarsysteme oder Infrarotsysteme oder auch Ultraschallsysteme - sowie eine entsprechende Steuereinheit eine Verkehrssituation als kritisch erfasst, so ist eine Warnung des Fahrers vor dieser Verkehrssituation durch eine Anzeige einer visuellen Warndarstellung notwendig. Gemäß des Stands der Technik ist es hierbei möglich, in unterschiedlichen Teilbereichen eines Head-Up-Displays 20 eine visuelle Warndarstellung anzeigen zu lassen. Ist jedoch der Blick des Fahrers nicht auf das Head-Up-Display 20 gerichtet, sondern auf eine der weiteren Anzeigen 24, 16, 17 so erreicht den Fahrer diese visuelle Warndarstellung auch bei Erregung seiner Aufmerksamkeit durch eine zusätzliche akustische Warnung nur verzögert, denn die visuelle Warndarstellung ist für ihn erst dann wahrnehmbar, wenn er seine Blickrichtung weg von den weiteren Anzeigeeinheiten 24, 16, 17 hin zu dem Head-Up-Display 20 richtet. Hierdurch gehen mitunter Sekundenbruchteile verloren, bevor der Fahrer reagieren kann, welches im Straßenverkehr mitunter äußerst kritisch ist.

Die Sensoreinheit 21 stellt Sensordaten bereit, anhand derer auf eine Blickrichtung des Fahrers geschlossen werden kann. Bei diesen Sensordaten kann es sich beispielsweise um Bilddaten handeln, welche durch eine zentrale Steuereinheit derart ausgewertet werden, dass auf eine Blickrichtung geschlossen wird. Alternativ kann es sich bei der Sensoreinheit 21 um eine Einheit handeln, welche als erste Sensordaten die Blickrichtung des Fahrers bereitstellt, wobei die Sensoreinheit 21 in diesem Fall eine Bilderkennungseinheit aufweist, welche eine Auswertung von Bilddaten selbstständig durchführt. Ist also auf die Blickrichtung des Fahrers geschlossen worden, so kann in dem Fall, dass der Fahrer beispielsweise zu dem Display 17 der zentralen Bedienkonsole 13 hinschaut, die Anzeige der visuellen Warndarstellung auf dem Display 17 der Bedienkonsole 13 vorgenommen werden. Hierdurch wird dem Fahrer die visuelle unmittelbar Warndarstellung dargeboten, so dass bereits vor der Änderung der Blickrichtung des Fahrers 100 von der Blickrichtung 34 von dem Display 17 hin zu der Blickrichtung 31 in Richtung der Frontscheibe 11 der Fahrer darüber informiert ist, dass eine kritische Verkehrssituation vorliegt.

Mit Ausgabe der visuellen Warndarstellung auf einer Anzeigeeinheit, welche in Abhängigkeit der Blickrichtung des Fahrers ausgewählt wird, kann vorzugsweise eine akustische Warnung erfolgen. Vorzugsweise wird von den in dem Kfz-Innenraum 1 vorhandenen Anzeigeeinheiten 20, 24, 16, 17 eine einzige Anzeigeeinheit ausgewählt, um die visuelle Warndarstellung anzuzeigen, so dass der Fahrer nicht durch mehrere Warndarstellungen auf mehreren Anzeigeeinheiten irritiert wird.

Vorzugsweise handelt es sich bei Sensoreinheiten zur Bereitstellung von Sensordaten ferner um Bedieneinheiten, beispielsweise der Bedieneinheit 18 der zentralen Bedienkonsole 13, welche Daten bezüglich einer durch den Fahrer vorgenommenen Bedienung bereitstellen. Hierzu ist die Bedieneinheit 18 ebenfalls über eine Schnittstelle zur Übermittlung der Sensordaten bezüglich der durch den Fahrer vorgenommenen Bedienung mit einer zentralen Steuereinheit verbunden.

Ferner kann es sich bei Bedieneinheiten vorzugsweise auch um ein Lenkrad handeln, dessen Betätigung durch den Fahrer 100 von einer Steuereinheit ausgewertet wird. Auch hierbei ist es notwendig, dass an dem Lenkrad Sensoren zur Übermittlung einer Bedientätigkeit des Fahrers über Schnittstellen mit der zentralen Steuereinheit verbunden sind.

Vorzugsweise wird als visuelle Warndarstellung ein beispielhaftes Bild oder eine beispielhafte Videosequenz einer Verkehrssituation dargestellt. Derart beispielhafte Bilddarstellungen haben den Vorteil, dass durch eine Abstraktion von Bildinformationen, beispielsweise durch Piktogramme, einem Fahrer eine entsprechende Warnung auf für ihn einfach verständliche Weise angezeigt werden kann. Diese beispielhaften Bilddarstellungen können ferner in Abhängigkeit eines Typs einer kritischen Verkehrssituation angezeigt werden, als welcher die erfasste Verkehrssituation klassifiziert wird. Ist also beispielsweise eine kritische Verkehrssituation erfasst worden, bei welcher ein Fußgänger die Fahrbahn überquert, so kann dann ein entsprechendes beispielhaftes Bild oder eine beispielhafte Videosequenz eines Fußgängers auf einer Fahrbahn als visuelle Warndarstellung ausgewählt und dem Fahrer angezeigt werden. Liegt als kritisch erfasste Verkehrssituation beispielsweise eine rote Ampel vor, so kann eine beispielhafte Darstellung einer roten Ampel als beispielhaftes Bild als visuelle Warndarstellung gewählt werden. Weitere Typen von Verkehrssituationen können beispielsweise eine Verkehrssituation mit einem Radfahrer sein, eine Annäherung an eine Kreuzung, ein Kraftfahrzeug welches vorausfährt und bremst oder ein einscherendes Kraftfahrzeug.

Vorzugsweise handelt es sich bei der visuellen Warndarstellung um eine reale Videosequenz einer momentanen Verkehrssituation des Fahrzeugs oder ein reales Bild einer momentanen Verkehrssituation des Fahrzeugs des Fahrzeugs. Ein solches reales Bild oder eine solche reale Videosequenz kann beispielsweise durch Umfeldkameras erfasst werden und dem Fahrer somit auf einer solchen Anzeige, auf welche gerade seine Blickrichtung gerichtet ist, die momentane Verkehrsituation angezeigt werden, ohne dass der Fahrer erst die Blickrichtung hin zur Frontscheibe 11 verändern muss. Ebenso ist bei Vorhandensein eines Night-Vision-Systems es möglich ein solches Bild als ein reales Bild oder eine reale Videosequenz auf dem Night-Vision-System anzuzeigen.

Vorzugsweise wird die Anzeige der visuellen Darstellung dann beendet, wenn der Fahrer eine Eingabeeinheit betätigt hat. Hierdurch ist es möglich, dass der Fahrer die visuelle Warndarstellung selbsttätig beendet, falls er sich durch die visuelle Warndarstellung abgelenkt fühlt, oder diese für nicht weiter wichtig erachtet.

Erfolgt keineBetätigung der Eingabeeinheit durch den Fahrer so wird die visuelle Warndarstellung vorzugsweise spätestens nach einer Beendigung der als kritisch erfassten Verkehrssituation sowie frühestens bei einer erkannten situationsadäquaten Reaktion des Fahrers beendet.

Die Fig. 3 zeigt eine erfindungsgemäße Steuereinheit 40, welche über eine erste Schnittstelle 51 mit mindestens einer ersten Anzeigeeinheit 61 verbunden ist. Die Steuereinheit 40 ist ferner über eine zweite Schnittstelle 52 mit mindestens einer zweiten Anzeigeinheit 62 verbunden. Vorzugsweise ist es ferner möglich, dass die Steuereinheit 40 über weitere Schnittstellen mit weiteren Anzeigeeinheiten verbunden ist. Über eine dritte Schnittstelle 53 ist die Steuereinheit 40 mit einer Sensoreinheit 63 verbunden. Die Sensoreinheit 63 stellt Sensordaten bereit, anhand derer die Steuereinheit 40 auf eine Blickrichtung des Fahrers schließt. Über eine vierte Schnittstelle 54 ist die Steuereinheit 40 über eine Erfassungseinheit 64 zur Erfassung einer kritischen Verkehrssituation verbunden. Wird durch die Erfassungseinheit 64 an die Steuereinheit 40 die Erfassung einer kritischen Verkehrssituation signalisiert, so schließt die Steuereinheit 40 anhand der Sensordaten der Sensoreinheit 63 auf die Blickrichtung des Fahrers und wählt in Abhängigkeit der Blickrichtung eine der Anzeigeeinheiten 61, 62 zur Anzeige einer visuellen Warndarstellung aus. Vorzugsweise wählt die Steuereinheit 40 eine einzige Anzeigeeinheit aus.

Die Steuereinheit 40 steuert hierbei die Anzeigeeinheiten 61, 62 vorzugsweise über die jeweiligen Schnittstellen der Anzeigeeinheiten 61, 62 an, wobei die visuelle Warndarstellung in Form von Signalisierungsdaten zur Ausgabe einer Warndarstellung oder in Form von Bilddaten übermittelt wird. Werden beispielhafte Bilder oder beispielhafte Videosequenzen als Bilddaten an die Anzeigeeinheiten 61, 62 ausgegeben, so kann die Steuereinheit 40 hierbei über einen Speicher verfügen, in welchem derartige beispielhafte Bilddaten gespeichert sind. Vorzugsweise verfügt die Steuereinheit 40 über eine fünfte Schnittstelle 55 zu einer Bilderfassungseinheit 65, bei welcher es sich beispielsweise um eine Umfeldkamera oder einer Kamera eines Night-Vision-Systems handelt. Bilddaten einer derartigen Bilderfassungseinheit 65 können vorzugsweise als reale Bilder oder als reale Videosequenzen von der Steuereinheit 40 an die Anzeigeeinheiten 61, 62 ausgegeben werden. Bei den Anzeigeeinheiten 61, 62 kann es sich vorzugsweise um Anzeigeeinheiten handeln, welche gemäß der Figuren 1 oder 2 dargestellt und beschrieben sind.

Die in den Ausführungsbeispielen dargelegten und dargestellten Ausführungsformen sind nicht nur jeweils separat für sich ausführbar, sondern können zur Erlangung weiterer Vorteile miteinander kombiniert werden.

## Patentansprüche

1. Verfahren für eine Anzeige einer visuellen Warndarstellung zur Warnung eines Fahrers (100) eines Fahrzeugs vor einer als kritisch erfassten Verkehrssituation, wobei anhand von durch mindestens eine Sensoreinheit (21) bereitgestellte Sensordaten auf eine Blickrichtung (31, 32, 33, 34, 35) des Fahrers (100) geschlossen wird,
wobei für die Anzeige der visuellen Warndarstellung aus einer Gruppe von mindestens zwei, separat von einander ansteuerbaren Anzeigeeinheiten (20, 24, 17, 16) ein Display eines Kombiinstrumentes, ein Display eines Navigationsgerätes, ein Display einer Head-Unit, ein Display eines Mobiltelefons oder ein Display einer mobilen Rechnereinheit in Abhängigkeit der Blickrichtung (31, 32, 33, 34, 35) ausgewählt wird,
**dadurch gekennzeichnet, dass** als visuelle Warndarstellung ein beispielhaftes Bild einer Verkehrssituation, eine beispielhafte Videosequenz einer Verkehrssituation, ein reales Bild einer momentanen Verkehrssituation des Fahrzeugs oder eine reale Videosequenz einer momentanen Verkehrssituation des Fahrzeugs angezeigt wird und dass nach Betätigung einer Eingabeeinheit durch den Fahrer die Anzeige der visuellen Warndarstellung beendet wird.

2. Verfahren nach Anspruch 1,
**dadurch gekennzeichnet, dass** eine einzige Anzeigeeinheit ausgewählt wird.

3. Verfahren nach Anspruch 1 oder 2,
**dadurch gekennzeichnet, dass** für die Anzeige der visuellen Warndarstellung die jeweiligen Anzeigeeinheiten (31, 32, 33, 34, 35) über jeweilige, separate Schnittstellen zur Einspeisung von Bilddaten angesteuert werden.

4. Verfahren nach einem der Ansprüche 1 bis 3,
**dadurch gekennzeichnet, dass** es sich bei einer ersten Sensoreinheit (21) um eine Bilderfassungseinheit handelt, welche als erste Sensordaten Bilddaten bereitstellt,
oder dass es sich bei der ersten Sensoreinheit um eine Bilderkennungseinheit handelt, welche als erste Sensordaten die Blickrichtung (31, 32, 33, 34, 35) des Fahrers (100) bereitstellt,
und dass es sich einer weiteren, zweiten Sensoreinheit um mindestens eine Bedieneinheit (18) zur Bedienung durch den Fahrer (100) handelt, welche als weitere Sensordaten Daten bezüglich einer durch den Fahrer (100) vorgenommenen Bedienung bereitstellt.

5. Verfahren nach einem der Ansprüche 1 bis 4,
**dadurch gekennzeichnet, dass** die visuelle Warndarstellung in Abhängigkeit eines erfassten Typs einer kritischen Verkehrssituation gewählt wird.

## Claims

1. Method for displaying a visual alert presentation for alerting a driver (100) of a vehicle to a traffic situation that registered as being critical, wherein a viewing direction (31, 32, 33, 34, 35) of the driver (100) is deduced from sensor data provided by at least one sensor unit (21),
wherein, from a group of at least two display units (20, 24, 17, 16) which are separately controllable, a display of an instrument cluster, a display of a navigation device, a display of a head-up unit, a display of a mobile telephone or a display of a mobile computing unit is selected depending on the viewing direction (31, 32, 33, 34, 35) is selected for displaying the visual alert presentation,
**characterized in that** an example image of a traffic situation, an example video sequence of a traffic situation, a real image of an instantaneous traffic situation of the vehicle or a real video sequence of an instantaneous traffic situation of the vehicle is displayed as the visual alert presentation and **in that** the display of the visual alert presentation is terminated upon actuation of an input unit by way of the driver.

2. Method according to Claim 1,
**characterized in that** a single display unit is selected.

3. Method according to Claim 1 or 2,
**characterized in that** the respective display units (31, 32, 33, 34, 35) are controlled via respective, separate interfaces for feeding in image data to display the visual warning presentation.

4. Method according to one of Claims 1 to 3,
**characterized in that** a first sensor unit (21) is an image capturing unit that provides image data as first sensor data,
or **in that** the first sensor unit is an image recognition unit that provides the viewing direction (31, 32, 33, 34, 35) of the driver (100) as first sensor data and **in that** a further, second sensor unit is at least one operating unit (18) for operation by way of the driver (100) that provides data relating to an operation performed by the driver (100) as further sensor data.

5. Method according to one of Claims 1 to 4,
**characterized in that** the visual warning presentation is selected depending on a captured type of a critical traffic situation.

## Revendications

1. Procédé d'affichage d'une représentation d'alerte visuelle pour alerter le conducteur (100) d'un véhicule d'une situation de circulation détectée comme étant critique, dans lequel une ligne de visée (31, 32, 33, 34, 35) du conducteur (100) est déduite de données de capteurs fournies par au moins une unité de capteur (21), dans lequel, pour l'affichage de la représentation d'alerte visuelle, un affichage d'un instrument combiné, un affichage d'un dispositif de navigation, un affichage d'une unité de tête, un affichage d'un téléphone mobile ou un affichage d'une unité informatique mobile est sélectionné en fonction de la ligne de visée (31, 32, 33, 34, 35) dans un groupe d'au moins deux unités d'affichage (20, 24, 17, 16) qui peuvent être commandées séparément l'une de l'autre,
**caractérisé en ce qu'**un exemple d'image d'une situation de circulation, un exemple de séquence vidéo d'une situation de circulation, une image réelle d'une situation de circulation instantanée du véhicule ou une séquence vidéo réelle d'une situation de circulation instantanée du véhicule sont affichés en tant que représentation d'alerte visuelle, et **en ce que** l'affichage de la représentation d'alerte visuelle est interrompu après qu'une unité de saisie a été actionnée par le conducteur.

2. Procédé selon la revendication 1, **caractérisé en ce qu'**une seule unité d'affichage est sélectionnée.

3. Procédé selon la revendication 1 ou 2, **caractérisé en ce que**, pour l'affichage de la représentation d'alerte visuelle, les unités d'affichage (31, 32, 33, 34, 35) respectives sont commandées par l'intermédiaire d'interfaces séparées respectives pour l'introduction de données d'image.

4. Procédé selon l'une des revendications 1 à 3,
**caractérisé en ce qu'**une première unité de capteur (21) est une unité d'acquisition d'image qui fournit des données d'image en tant que premières données de capteur, ou
**en ce que** la première unité de capteur est une unité de reconnaissance d'image qui fournit la ligne de visée (31, 32, 33, 34, 35) du conducteur (100) en tant que premières données de capteur,
et **en ce qu'**une seconde unité de capteur supplémentaire est au moins une unité de commande (18) destinée à être utilisée par le conducteur (100), qui fournit en tant que données de capteur supplémentaires des données relatives à une opération effectuée par le conducteur (100).

5. Procédé selon l'une des revendications 1 à 4,
**caractérisé en ce que** la représentation d'alerte visuelle est sélectionnée en fonction d'un type détecté d'une situation de circulation critique.
